(19)

Europäisches Patentamt
European Patent Office
Office européen des brevets

(11) **EP 3 550 056 A1**

(12) **EUROPEAN PATENT APPLICATION**

(43) Date of publication:
09.10.2019 Bulletin 2019/41

(21) Application number: 19162706.6

(22) Date of filing: 14.03.2019

(51) Int Cl.:
*C25B 1/10* *(2006.01)*          *C25B 15/02* *(2006.01)*
*B01D 53/32* *(2006.01)*       *H01M 8/04089* *(2016.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 04.04.2018 JP 2018072423

(71) Applicant: **Panasonic Intellectual Property
Management Co., Ltd.
Osaka-shi, Osaka 540-6207 (JP)**

(72) Inventors:
• YAKUMARU, Yuuichi
  **Osaka-shi, Osaka 540-6207 (JP)**
• UKAI, Kunihiro
  **Osaka-shi, Osaka 540-6207 (JP)**

(74) Representative: **Grünecker Patent- und
Rechtsanwälte
PartG mbB
Leopoldstraße 4
80802 München (DE)**

(54) **HYDROGEN SUPPLY SYSTEM**

(57)    A hydrogen supply system includes: an electrochemical hydrogen pump which includes: an electrolyte membrane; a pair of anode and cathode provided on both surfaces of the electrolyte membrane; and a current adjuster which adjusts a current flowing between the anode and the cathode and which generates hydrogen boosted at a cathode side from an anode fluid supplied to an anode side when the current is allowed to flow between the anode and the cathode by the current adjuster; and a controller which controls the current adjuster to decrease the current flowing between the anode and the cathode when the pressure of a cathode gas containing the boosted hydrogen is increased.

EP 3 550 056 A1

**Description**

BACKGROUND

1. Technical Field

The present disclosure relates to a hydrogen supply system.

2. Description of the Related Art

In recent years, because of environmental issues, such as the global warming, and energy issues, such as depletion of petroleum resources, as clean alternative energy resources instead of fossil fuels, attention has been paid to a hydrogen gas. When a hydrogen gas is combusted, water is only emitted, and carbon dioxide which causes the global warming, nitrogen oxides, and the like are not emitted; hence, a hydrogen gas is expected as clean energy. In addition, as a device using a hydrogen gas as a fuel, for example, fuel batteries are mentioned, and for automobile power sources and household power generation, the fuel batteries have been developed and spread. In addition, in a coming hydrogen society, technical development has been desired so that, besides hydrogen gas manufacturing, a hydrogen gas can be stored at a high density, and a small volume thereof can be transported or used at a low cost. In particular, in order to facilitate the spread of a fuel battery, a fuel supply infrastructure is required to be well organized. Accordingly, various proposals have been made to obtain a highly pure hydrogen gas by purification and to boost the pressure of a hydrogen gas.

For example, Japanese Unexamined Patent Application Publication No. 2015-117139 has disclosed a hydrogen purification and boosting system which purifies, boosts, and stores hydrogen.

SUMMARY

However, according to the related example, to reduce an increase in power consumption amount of an electrochemical hydrogen pump which is caused when the pressure of hydrogen is boosted thereby to a predetermined value or more has not been sufficiently considered.

One non-limiting and exemplary embodiment provides a hydrogen supply system in that an increase in power consumption amount of an electrochemical hydrogen pump which is caused when the pressure of hydrogen is boosted thereby to a predetermined value or more can be reduced as compared to that in the past.

In one general aspect, the techniques disclosed here feature a hydrogen supply system including: an electrochemical hydrogen pump which includes: an electrolyte membrane; a pair of anode and cathode provided on both surfaces of the electrolyte membrane; and a current adjuster which adjusts a current flowing between the anode and the cathode and which generates hydrogen boosted at a cathode side from an anode fluid supplied to an anode side when the current is allowed to flow between the anode and the cathode by the current adjuster; and a controller which controls the current adjuster to decrease the current flowing between the anode and the cathode when the pressure of a cathode gas containing the boosted hydrogen is increased.

The hydrogen supply system according to the aspect of the present disclosure has an advantage in that the increase in power consumption amount of an electrochemical hydrogen pump which is caused when the pressure of hydrogen is boosted thereby to a predetermined value or more can be reduced as compared to that in the past.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

BRIEF DESCRIPTION OF THE DRAWINGS

Fig. 1 is a schematic view showing one example of a hydrogen supply system of an embodiment;
Fig. 2 is a schematic view showing one example of an electrochemical hydrogen pump of the hydrogen supply system of the embodiment;
Fig. 3 is a graph showing one example of a current control of a current flowing between an anode and a cathode of an electrochemical hydrogen pump of a hydrogen supply system according to a first example of the embodiment;
Fig. 4 is a graph showing one example of an overvoltage of an electrochemical hydrogen pump of a related hydrogen supply system;

Fig. 5 is a graph showing one example of an overvoltage of the electrochemical hydrogen pump of the hydrogen supply system according to the first example of the embodiment;

Fig. 6 is a graph showing one example of a power consumption of the electrochemical hydrogen pump of the hydrogen supply system according to the first example of the embodiment;

Fig. 7 is a graph showing one example of a power consumption amount of the electrochemical hydrogen pump of the hydrogen supply system according to the first example of the embodiment;

Fig. 8 is a graph showing one example of a current control of a current flowing between an anode and a cathode of an electrochemical hydrogen pump of a hydrogen supply system according to a second example of the embodiment; and

Fig. 9 is a graph showing one example of a power consumption of the electrochemical hydrogen pump of the hydrogen supply system according to the second example of the embodiment.

DETAILED DESCRIPTION

Intensive research was made to reduce an increase in power consumption amount of an electrochemical hydrogen pump which is caused when the pressure of hydrogen is boosted thereby to a predetermined value or more, and the following finding was obtained.

The relationship of a voltage E applied between an anode and a cathode of an electrochemical hydrogen pump with an anode gas pressure at an anode side and a cathode gas pressure at a cathode side of the electrochemical hydrogen pump can be obtained from Nernst Equation (1) of the following oxidation-reduction reaction.

$$E=(RT/2F)\ln(P2/P1)+ir \qquad \text{Equation (1)}$$

In Equation (1), R represents the gas constant (8.3145 J/K·mol), T represents a cell temperature (K), F represents Faraday constant (96,485 C/mol), P2 represents the cathode gas pressure at the cathode side, P1 represents the anode gas pressure at the anode side, i represents a current density (A/cm$^2$), and r represents a cell resistance ($\Omega \cdot cm^2$).

In addition, of the voltage E applied by a voltage applier, "(RT/2F)ln(P2/P1)" of the right term of Equation (1) represents an overvoltage involving Nernst loss of the electrochemical hydrogen pump, and "ir" of the right term of the Equation (1) represents the sum of a reaction overvoltage and a diffusion overvoltage of the electrochemical hydrogen pump.

As apparent from Equation (1), as the cathode gas pressure at the cathode side of the electrochemical hydrogen pump is increased higher than the anode gas pressure at the anode side, the overvoltage involving Nernst loss is increased in accordance with "(RT/2F)ln(P2/P1)" of Equation (1). That is, when the cathode gas pressure at the cathode side of the electrochemical hydrogen pump is approximately equal to the anode gas pressure at the anode side, although the overvoltage involving Nernst loss is approximately zero, as the cathode gas pressure at the cathode side of the electrochemical hydrogen pump is increased higher than the anode gas pressure at the anode side, the overvoltage involving Nernst loss is exponentially increased.

Accordingly, the present inventors discovered that when the cathode gas pressure of the electrochemical hydrogen pump is increased, the increase in power consumption amount of the electrochemical hydrogen pump which is caused when the pressure of hydrogen is boosted thereby to a predetermined value or more can be reduced by decreasing a current flowing between the anode and the cathode of the electrochemical hydrogen pump as compared to that by controlling the current flowing between the anode and the cathode constant, and as a result, the following aspect of the present disclosure was conceived.

In addition, Japanese Unexamined Patent Application Publication No. 2015-117139 has not disclosed a method how to control the current flowing between the anode and cathode of the electrochemical hydrogen pump when the pressure of hydrogen is boosted thereby.

That is, a hydrogen supply system according to a first aspect of the present disclosure includes: an electrochemical hydrogen pump which includes: an electrolyte membrane; a pair of anode and cathode provided on both surfaces of the electrolyte membrane; and a current adjuster which adjusts a current flowing between the anode and the cathode and which generates hydrogen boosted at a cathode side from an anode fluid supplied to an anode side when the current is allowed to flow between the anode and the cathode by the current adjuster; and a controller which controls the current adjuster to decrease the current flowing between the anode and the cathode when the pressure of a cathode gas containing the boosted hydrogen is increased.

According to a hydrogen supply system of a second aspect of the present disclosure, in the hydrogen supply system according to the first aspect, the current adjuster includes a voltage applier which applies a voltage between the anode and the cathode of the electrochemical hydrogen pump, and the controllers may decrease the voltage applied by the voltage applier to decrease the current flowing between the anode and the cathode of the electrochemical hydrogen pump when the pressure of the cathode gas is increased.

According to the structure described above, the hydrogen supply system of this aspect can reduce an increase in power consumption amount of the electrochemical hydrogen pump which is caused when the pressure of hydrogen is boosted thereby to a predetermined value or more as compared to that in the past.

For example, at an initial stage of a hydrogen boosting operation at which the cathode gas pressure of the electrochemical hydrogen pump is not so high, since the overvoltage involving Nernst loss is low, even if the current flowing between the anode and the cathode of the electrochemical hydrogen pump is increased, the power consumption involving Nernst loss is a small part of the power consumption of the electrochemical hydrogen pump. Hence, according to the hydrogen supply system of this aspect, at the initial stage of the hydrogen boosting operation, a current control to promote hydrogen boosting at the cathode is performed by positively increasing the current flowing between the anode and the cathode of the electrochemical hydrogen pump. In addition, when the cathode gas pressure is increased, a current control to decrease this current is performed. The current control as described above may effectively reduce the increase in power consumption amount of the electrochemical hydrogen pump in some cases as compared to the case in which the current flowing between the anode and the cathode of the electrochemical hydrogen pump is controlled constant.

Hereinafter, with reference to the accompanying drawings, embodiments of the present disclosure will be described. The following embodiments each show one example of each of the above aspects. Hence, the numerical values, the shapes, the materials, the constituent elements, the arrangement positions and the connection modes therebetween, and the like are merely described by way of example and are not intended to limit the above aspects unless otherwise specifically noted in Claims. In addition, among the following constituent elements, a constituent element not described in an independent claim which shows the topmost concept of the aspect is described as an arbitrary constituent element. In addition, in the drawings, description of a constituent element designated by the same reference numeral may be omitted in some cases. In order to facilitate the understanding of the drawings, the constituent elements are schematically drawn, and the shapes, the dimensional ratios, and the like may be not precisely shown in some cases. In addition, various types of graphs in the drawings schematically show the trends of data, and the data may be not precisely reflected on the graphs in some cases.

(Embodiments)

[System Structure]

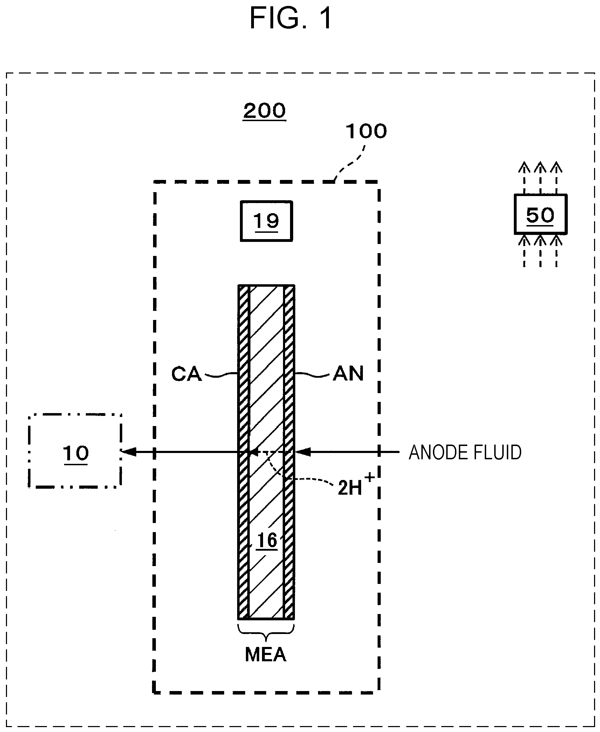

Fig. 1 is a schematic view showing one example of a hydrogen supply system of an embodiment.

In the example shown in Fig. 1, a hydrogen supply system 200 includes an electrochemical hydrogen pump 100 and a controller 50. In this example, the electrochemical hydrogen pump 100 includes an electrolyte membrane 16, an anode AN, a cathode CA, and a current adjuster 19. In addition, as shown by a two-dot chain line of Fig. 1, together with the hydrogen supply system 200, a hydrogen storage device 10 may also be provided in some cases.

The electrolyte membrane 16 may have any structure as long as being an electrolyte membrane having a proton conductivity. As the electrolyte membrane 16, for example, a high molecular weight electrolyte membrane or a solid oxide membrane may be mentioned. In addition, as the high molecular weight electrolyte membrane, for example, a fluorine-based high molecular weight electrolyte membrane may be mentioned. In particular, for example, Nafion (registered trade name, manufactured by du Pont) or Aciplex (registered trade name, manufactured by Asahi Kasei Corporation) may be used.

The anode AN and the cathode CA, which form a pair of electrodes, are provided on both surfaces of the electrolyte membrane 16. That is, the cathode CA is provided on one primary surface of the electrolyte membrane 16, and the anode AN is provided on the other primary surface of the electrolyte membrane 16. In addition, a laminate structural body formed of the cathode CA, the electrolyte membrane 16, and the anode AN is called a membrane electrode assembly (hereinafter, referred to as "MEA").

The current adjuster 19 is a device adjusting a current flowing between the anode AN and the cathode CA of the electrochemical hydrogen pump 100. The current adjuster 19 may have any structure as long as being capable of adjusting the current flowing between the anode AN and the cathode CA.

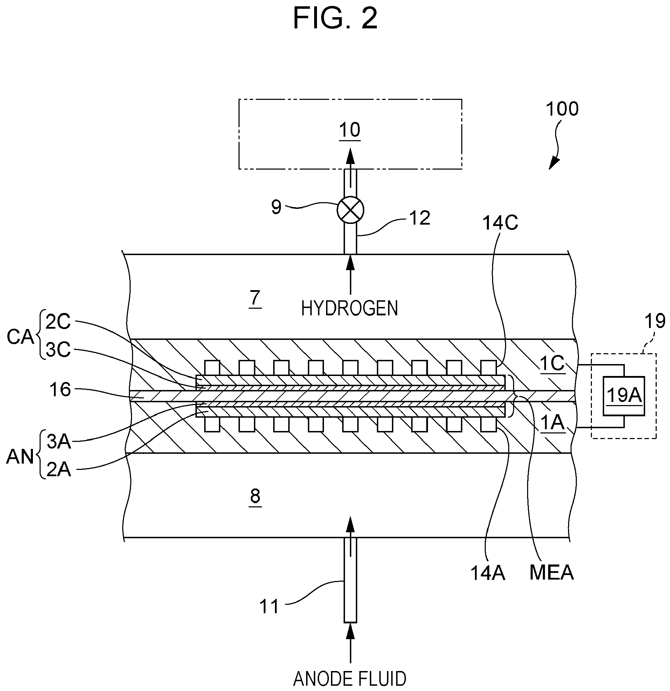

The current adjuster 19 may include, for example, a voltage applier 19A (see Fig. 2) applying a voltage between the anode AN and the cathode CA. In this case, when being connected to a direct current power source, such as a battery, a solar cell, or a fuel battery, the voltage applier 19A includes a DC/DC converter, and when being connected to an alternating current power source, such as a commercial power source, the voltage applier 19A includes an AC/DC converter.

The electrochemical hydrogen pump 100 is a device in which since the current is allowed to flow between the anode AN and the cathode CA by the current adjuster 19, hydrogen ($H_2$) boosted at a cathode CA side is generated from an anode fluid supplied to an anode AN side, and a cathode gas containing the boosted hydrogen is supplied to the hydrogen storage device 10. A concrete example of the electrochemical hydrogen pump 100 will be described later.

In addition, as the hydrogen storage device 10, for example, a tank may be mentioned. In addition, as the anode fluid, for example, a hydrogen-containing gas or water may be mentioned. When the anode fluid is water, on the anode AN, protons ($H^+$) are generated by electrolysis of water. When the anode fluid is a hydrogen-containing gas, on the anode AN, protons are generated from hydrogen of the hydrogen-containing gas. In addition, as the hydrogen-containing gas, for example, a reformed gas or a hydrogen-containing gas containing water vapor generated by electrolysis of water may be mentioned.

In addition, in the hydrogen supply system 200 of this embodiment, after being supplied from the electrochemical hydrogen pump 100 to the hydrogen storage device 10, hydrogen may be supplied to an appropriate hydrogen demander from the hydrogen storage device 10. As the hydrogen demander described above, for example, a household or an automobile fuel battery may be mentioned.

When the pressure of the cathode gas is increased, the controller 50 controls the current adjuster 19 so as to decrease the current flowing between the anode AN and the cathode CA of the electrochemical hydrogen pump 100. In this embodiment, as the pressure of the cathode gas, the pressure in the hydrogen storage device 10 is used. The pressure in the hydrogen storage device 10 is detected by a pressure sensor (not shown) provided in the hydrogen storage device 10. The controller 50 performs the above control based on the pressure detected by this pressure sensor. In addition, as the pressure of the cathode gas, although the pressure in the hydrogen storage device 10 is used, the pressure is not limited to that described in this example. Any pressure which can be regarded as the pressure of the cathode gas may be used. For example, a pressure of a flow path through which the cathode gas output from the electrochemical hydrogen pump flows may also be used. In this case, the pressure detected by a pressure sensor provided for this flow path is used as the pressure of the cathode gas.

In this example, when the current adjuster 19 includes the voltage applier 19A, the current flowing between the anode AN and the cathode CA may be adjusted by changing an application voltage to be applied between the anode AN and the cathode CA of the electrochemical hydrogen pump 100. That is, in this case, when the pressure in the hydrogen storage device 10 is increased, the controller 50 decreases the application voltage by the voltage applier 19A so as to decrease the current flowing between the anode AN and the cathode CA of the electrochemical hydrogen pump 100.

In addition, the control to decrease the current flowing between the anode AN and the cathode CA of the electrochemical hydrogen pump 100 can also be realized by fixing the application voltage of the voltage applier 19A to a constant value. For example, when the gas pressure in the hydrogen storage device 10 is increased, in accordance with Nernst Equation (1), the resistance between the anode AN and the cathode CA of the electrochemical hydrogen pump 100 is increased. Hence, in this case, when the application voltage of the voltage applier 19A is fixed to a predetermined value, the current flowing between the anode AN and the cathode CA of the electrochemical hydrogen pump 100 is automatically decreased from the relationship among the voltage, the current, and the resistance. Hence, the control to fix the application voltage of the voltage applier 19A to a predetermined value as described above is also included in the control of the present disclosure in which "when the pressure in the hydrogen storage device 10 is increased, the current adjuster 19 is controlled so as to decrease the current flowing between the anode AN and the cathode CA of the electrochemical hydrogen pump 100".

The controller 50 may have any structure as long as having a control function. The controller 50 includes, for example, a computing circuit (not shown) and a storage circuit (not shown) storing a control program. As the computing circuit, for example, a MPU and/or a CPU may be mentioned. As the storage circuit, for example, a memory may be mentioned. The controller 50 may be formed of a single controller performing a central control or a plurality of controllers performing distributed controls in cooperation with each other.

[Concrete Example of Electrochemical Hydrogen Pump]

Fig. 2 is a schematic view showing one example of an electrochemical hydrogen pump of the hydrogen supply system of the embodiment. In addition, in Fig. 2, as the current adjuster 19, a voltage applier 19A applying a voltage between an anode AN and a cathode CA is shown.

In the example shown in Fig. 2, an electrochemical hydrogen pump 100 includes an electrolyte membrane 16, the anode AN, the cathode CA, the voltage applier 19A, a cathode separator 1C, an anode separator 1A, a cathode chamber 7, an anode chamber 8, an on-off valve 9, an anode inlet pipe 11, and a cathode outlet pipe 12.

In addition, since the electrolyte membrane 16 is similar to that of the electrochemical hydrogen pump 100 shown in Fig. 1, description thereof is omitted. In addition, since the structure of the voltage applier 19A is similar to that described above, detailed description thereof is omitted.

The cathode CA is formed of a cathode catalyst layer 3C and a cathode gas diffusion layer 2C, and the anode AN is formed of an anode catalyst layer 3A and an anode fluid diffusion layer 2A.

The cathode catalyst layer 3C is provided on one primary surface of the electrolyte membrane 16. In the cathode catalyst layer 3C, for example, platinum is contained as a catalyst metal, but the catalyst metal is not limited thereto.

The anode catalyst layer 3A is provided on the other primary surface of the electrolyte membrane 16. In the anode catalyst layer 3A, for example, platinum is contained as a catalyst metal, but the catalyst metal is not limited thereto.

In addition, as a method for preparing a catalyst for the cathode catalyst layer 3C and the anode catalyst layer 3A, various methods may be mentioned; hence, the methods are not particularly limited. For example, as a catalyst carrier, an electrically conductive porous material powder or a carbon-based powder may be mentioned. As the carbon-based powder, for example, a powder of graphite, carbon black, or active carbon having an electric conductivity may be mentioned. A method in which platinum or another catalyst metal is supported on a carrier, such as carbon, is not particularly limited. For example, a method, such as powder mixing or liquid phase mixing, may be used. As the latter liquid phase mixing, for example, there may be mentioned a method in which a carrier, such as carbon, is dispersed in a colloid liquid containing a catalyst component so that the catalyst component is adsorbed on the carrier. In addition, if needed, an active-oxygen removing material is used as the carrier, and platinum or another catalyst metal can be supported thereon by the method similar to that described above. The state of a catalyst metal, such as platinum, supported on the carrier is not particularly limited. For example, after being finely pulverized, the catalyst metal may be supported on the carrier in a highly dispersed state.

The cathode gas diffusion layer 2C is provided on the cathode catalyst layer 3C. The cathode gas diffusion layer 2C is formed of a porous material and has an electric conductivity and a gas diffusion property. The cathode gas diffusion layer 2C preferably has an elasticity which can appropriately follow the displacement and/or deformation of a constituent element generated by the difference in pressure between the anode AN and the cathode CA during operation of the electrochemical hydrogen pump 100.

The cathode gas diffusion layer 2C is formed, for example, from highly elastic graphitized carbon fibers or a porous body formed by performing platinum plating on the surface of a titanium powder sintered body and may be used in the form of paper. In addition, in the case in which the former graphitized carbon fibers are used, for example, when being processed by a heat treatment at 2,000°C or more, the carbon fibers are changed into graphite fibers having well grown graphite crystals.

The anode fluid diffusion layer 2A is provided on the anode catalyst layer 3A. The anode fluid diffusion layer 2A is formed of a porous material and has an electric conductivity and a gas diffusion property. The anode fluid diffusion layer 2A preferably has a rigidity so as to withstand a high pressure caused by the electrolyte membrane 16.

As the anode fluid diffusion layer 2A, for example, there may be used a sintered body of metal fibers formed from titanium, a titanium alloy, stainless steel, or the like, a sintered body of a metal powder formed from those mentioned above, an expanded metal, a metal mesh, of a punched metal.

In the electrically conductive anode separator 1A, a fluid flow path 14A through which an anode fluid (such as water or a hydrogen-containing gas) flows is provided. That is, the anode separator 1A is a member which supplies the anode fluid to the anode fluid diffusion layer 2A. In particular, in the anode separator 1A, the fluid flow path 14A is formed, for example, to have a serpentine or a linear shape when viewed in plan, and a region in which this fluid flow path 14A is formed is disposed so as to be in contact with the bottom surface of the anode fluid diffusion layer 2A.

In the electrically conductive cathode separator 1C, a gas flow path 14C through which a hydrogen gas flows is provided. That is, in the gas flow path 14C of the cathode separator 1C, a hydrogen gas flows from the cathode gas diffusion layer 2C. In particular, in the cathode separator 1C, the gas flow path 14C is formed, for example, to have a serpentine or a linear shape when viewed in plan, and a region in which this gas flow path 14C is formed is disposed so as to be in contact with the top surface of the cathode gas diffusion layer 2C.

In addition, the top surface and the bottom surface of MEA formed of the cathode CA, the electrolyte membrane 16, and the anode AN described above are supported by the cathode separator 1C and the anode separator 1A, respectively, so that a single cell of the electrochemical hydrogen pump 100 is obtained. In addition, if needed, for example, a cooling device (not shown) is provide for the single cell of the electrochemical hydrogen pump 100, and at least two single cells as described above may be laminated to form a stack (not shown) formed of a plurality of single cells.

In this case, the cathode gas diffusion layer 2C and the anode fluid diffusion layer 2A are electricity feeders of the cathode CA and the anode AN, respectively, of the MEA 15. That is, a high potential side terminal of the voltage applier 19A is connected to the anode separator 1A, and a low potential side terminal of the voltage applier 19A is connected to the cathode separator 1C. Accordingly, the anode fluid diffusion layer 2A functions to electrically connect between the anode separator 1A and the anode catalyst layer 3A, and the cathode gas diffusion layer 2C functions to electrically connect between the cathode separator 1C and the cathode catalyst layer 3C.

In addition, the anode fluid diffusion layer 2A also functions to diffuse the anode fluid between the fluid flow path 14A of the anode separator 1A and the anode catalyst layer 3A, and the cathode gas diffusion layer 2C also functions to diffuse a hydrogen gas between the gas flow path 14C of the cathode separator 1C and the cathode catalyst layer 3C. For example, the anode fluid flowing in the fluid flow path 14A of the anode separator 1A diffuses to the surface of the anode catalyst layer 3A through the anode fluid diffusion layer 2A.

The inside of the anode chamber 8 communicates with the anode inlet pipe 11 and also with the fluid flow path 14A of the anode separator 1A through a fluid flow path (such as a pipe or a manifold) not shown. Accordingly, the anode fluid flowing in the anode inlet pipe 11 is supplied to the fluid flow path 14A of the anode separator 1A after passing through the anode chamber 8.

The inside of the cathode chamber 7 communicates with the cathode outlet pipe 12 and also with the gas flow path 14C of the cathode separator 1C through a fluid flow path (such as a pipe or a manifold) not shown. Accordingly, after passing through MEA, a hydrogen gas flows into the cathode chamber 7 through the gas flow path 14C of the cathode separator 1C and is then supplied to the cathode outlet pipe 12. In addition, for the cathode outlet pipe 12, the on-off valve 9 (such as an electromagnetic valve) is provided, and when the on-off valve 9 is appropriately operated, a hydrogen gas is stored in the hydrogen storage device 10. In addition, the hydrogen gas as described above is then used as a fuel of a hydrogen demander (such as a fuel battery) not shown.

[Operation]

Hereinafter, the operation of the hydrogen supply system 200 of the embodiment will be described with reference to Fig. 1. In addition, the following operation may be performed, for example, by the computing circuit of the controller 50 in accordance with the control program from the storage circuit. However, the following operation is not always required to be performed by the controller 50. An operator may also perform all or part of the operation.

Hereinafter, the case in which by the voltage applier 19A, a desired voltage is applied between the anode AN and the cathode CA will be described. In addition, the case in which a hydrogen-containing gas is supplied to the anode AN of the electrochemical hydrogen pump 100 will be described.

First, by the voltage applier 19A, the desired voltage is applied between the anode AN and the cathode CA. In addition, when the hydrogen-containing gas is supplied to the anode AN of the electrochemical hydrogen pump 100, hydrogen of the hydrogen-containing gas releases electrons on the anode catalyst layer 3A of the anode AN to form protons ($H^+$) (Formula (2)). The electrons thus released move to the cathode CA through the voltage applier 19A.

On the other hand, the protons pass through the electrolyte membrane 16 and move to the cathode catalyst layer 3C of the cathode CA. On the cathode catalyst layer 3C of the cathode CA, a reduction reaction occurs between the protons passing through the electrolyte membrane 16 and electrons, so that a hydrogen gas ($H_2$) is generated (Formula (3)).

In addition, when the pressure loss of a flow path member which guides a hydrogen gas from the cathode CA of the electrochemical hydrogen pump 100 to the outside is increased (for example, when the on-off valve 9 is closed), the cathode gas pressure P2 at the cathode CA side is increased.

$$\text{Anode AN: } H_2 \text{ (low pressure)} \rightarrow 2H^+ + 2e^- \qquad (2)$$

$$\text{Cathode CA: } 2H^+ + 2e^- \rightarrow H_2 \text{ (high pressure)} \qquad (3)$$

In addition, from the above Nernst Equation (1), it can be easily understood that when the voltage E of the voltage applier 19A is increased, the cathode pressure P2 at the cathode CA side is increased.

Accordingly, in the electrochemical hydrogen pump 100, the voltage E of the voltage applier 19A is increased besides the increase in pressure loss of the above flow path member, so that the cathode gas pressure at the cathode CA side is increased. The cathode gas at the cathode CA side at which the gas pressure is increased is filled in the hydrogen storage device 10. On the other hand, when the cathode gas pressure at the cathode CA side is less than a predetermined pressure, by closing the on-off valve 9, the cathode chamber 7 is isolated from the hydrogen storage device 10. Accordingly, a hydrogen gas in the hydrogen storage device 10 in a high pressure state can be suppressed from flowing back to the cathode chamber 7.

As described above, the hydrogen supply system 200 of this embodiment is formed so that in the electrochemical hydrogen pump 100, when the current is allowed to flow between the anode AN and the cathode CA by the voltage applier 19A, hydrogen ($H_2$) boosted at the cathode CA side is generated from the hydrogen-containing gas supplied to the anode AN side, and the hydrogen thus boosted is supplied to the hydrogen storage device 10. Accordingly, a high pressure hydrogen gas having a desired target pressure PT can be filled in the hydrogen storage device 10.

In the hydrogen supply system 200 of this embodiment, as described above, when the pressure in the hydrogen storage device 10 is increased, the controller 50 controls the voltage applier 19A so as to decrease the current flowing between the anode AN and the cathode CA of the electrochemical hydrogen pump 100.

Accordingly, in the hydrogen supply system 200 of this embodiment, the increase in power consumption amount of the electrochemical hydrogen pump 100 which is caused when the pressure of hydrogen is boosted thereby to a predetermined value or more can be reduced as compared to that in the past.

For example, at the initial stage of the hydrogen boosting operation at which the cathode gas pressure at the cathode CA side of the electrochemical hydrogen pump 100 is not so high, since the overvoltage involving Nernst loss is low, even if the current flowing between the anode AN and the cathode CA of the electrochemical hydrogen pump 100 is increased, the power consumption involving Nernst loss of the power consumption of the electrochemical hydrogen pump 100 is small. Hence, in the hydrogen supply system 200 of this embodiment, at the initial stage of the hydrogen boosting operation of the electrochemical hydrogen pump 100, the current flowing between the anode AN and the cathode CA of the electrochemical hydrogen pump 100 is positively increased, so that a current control to promote hydrogen boosting at the cathode CA side is performed. In addition, when the cathode gas pressure at the cathode CA side is increased, a current control to decrease this current is performed. Compared to the case in which the current flowing between the anode AN and the cathode CA of the electrochemical hydrogen pump 100 is controlled constant, the current control as described above may be effective in some cases to reduced the increase in power consumption amount of the electrochemical hydrogen pump 100. The details of the above current control will be described in the following first and second examples.

(First Example)

A hydrogen supply system 200 of a first example is similar to the hydrogen supply system 200 of the embodiment except for the following current control.

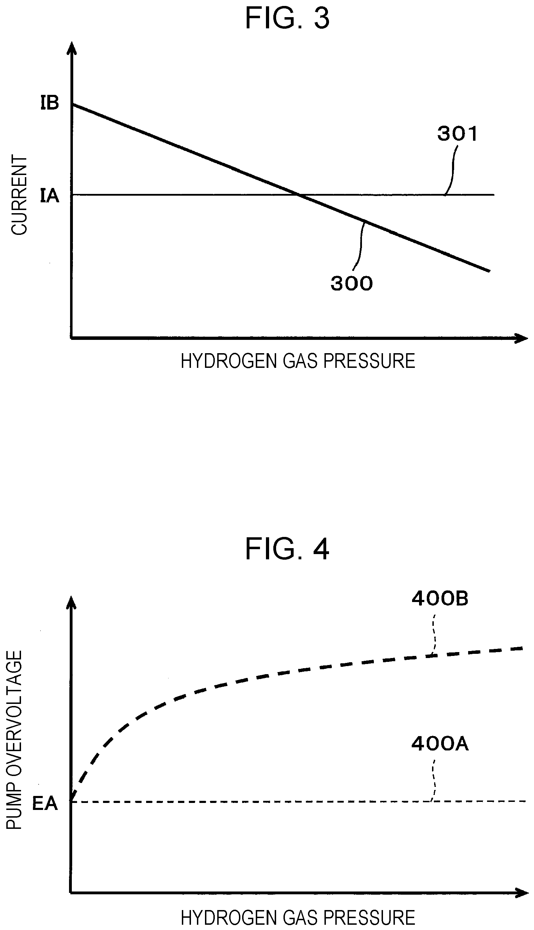

Fig. 3 is a graph showing one example of a current control of a current flowing between an anode and a cathode of an electrochemical hydrogen pump of the hydrogen supply system of the first example of the embodiment. The horizontal axis of Fig. 3 indicates a cathode gas pressure at a cathode CA side of an electrochemical hydrogen pump 100. The vertical axis of Fig. 3 indicates the current flowing between an anode AN and a cathode CA of the electrochemical hydrogen pump 100.

Fig. 3 shows a thick solid line (hereinafter, referred to as "current graph 300 of Example") indicating the current flowing between the anode AN and the cathode CA of the electrochemical hydrogen pump 100 of the hydrogen supply system 200 of the first example. In addition, as a comparative example, a thin solid line (hereinafter, referred to as "current graph 301 of Comparative Example") indicating a constant current flowing between the anode AN and the cathode CA of the electrochemical hydrogen pump 100 is also shown.

As shown in Fig. 3, at an initial stage of a hydrogen boosting operation at which the cathode gas pressure at the cathode CA side of the electrochemical hydrogen pump 100 is not so high, the current of the current graph 300 of Example is set to be high as compared to the current of the current graph 301 of Comparative Example. In particular, a current IB of the current graph 300 of Example at which boosting of a hydrogen gas at the cathode CA side is started by the electrochemical hydrogen pump 100 is higher than a current IA of the current graph 301 of Comparative Example. In addition, according to the current graph 300 of Example, as the cathode gas pressure at the cathode CA side of the electrochemical hydrogen pump 100 is increased, the current flowing between the anode AN and the cathode CA of the electrochemical hydrogen pump 100 is approximately linearly decreased from the current IB.

As one example, the current IB of the current graph 300 at which the boosting of a hydrogen gas at the cathode CA side is started by the electrochemical hydrogen pump 100 may be approximately 2.2 A/cm$_2$ on a current density basis, and the current IA of the current graph 301 of Comparative Example may be approximately 1.5 A/cm$^2$ on a current density basis. In addition, those current densities are described by way of example and are not limited to those of this example.

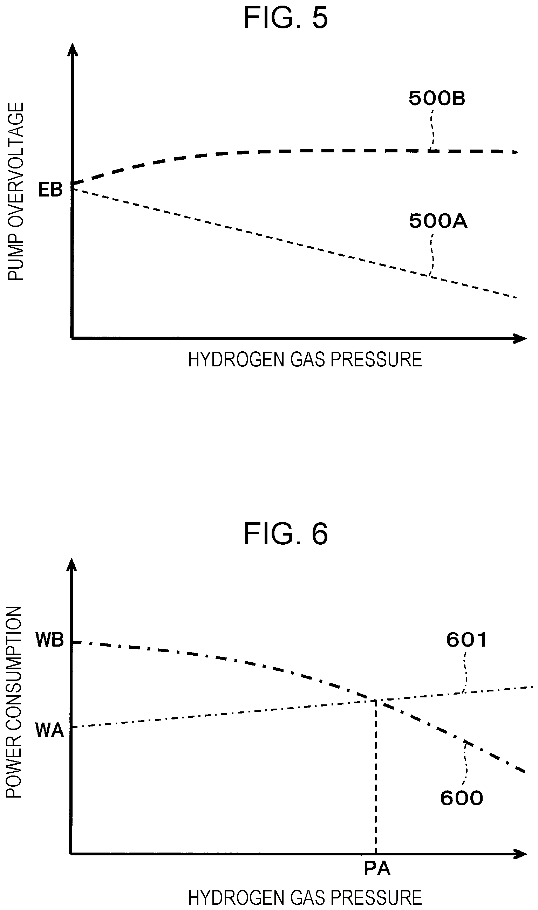

Fig. 4 is a graph showing one example of an overvoltage of an electrochemical hydrogen pump of a related hydrogen supply system. Fig. 5 is a graph showing one example of an overvoltage of the electrochemical hydrogen pump of the hydrogen supply system of the first example of the embodiment.

The horizontal axes of Figs. 4 and 5 each indicate the cathode gas pressure at the cathode CA side of the electrochemical hydrogen pump 100. The vertical axes of Figs. 4 and 5 each indicate an overvoltage (hereinafter, referred to as "pump overvoltage") of the electrochemical hydrogen pump 100.

Fig. 4 shows, in the case in which the current control shown by the current graph 301 of Comparative Example is performed, a thin dotted line (hereinafter, referred to as "reaction/diffusion overvoltage graph 400A) indicating the sum of a reaction overvoltage and a diffusion overvoltage of the electrochemical hydrogen pump 100 and a thick dotted line (hereinafter, referred to as "total overvoltage graph 400B) indicating the total of the sum of the reaction overvoltage and the diffusion overvoltage of the electrochemical hydrogen pump 100 and an overvoltage involving Nernst loss thereof.

As described above, among the application voltages of the electrochemical hydrogen pump, the "(RT/2F)In(P2/P1)" of Equation (1) indicates the overvoltage involving Nernst loss of the electrochemical hydrogen pump 100, and the "ir" of Equation (1) indicates the sum of the reaction overvoltage and the diffusion overvoltage of the electrochemical hydrogen pump 100.

In this example, as shown in Fig. 3, according to the current graph 301 of Comparative Example, the current flowing between the anode AN and the cathode CA of the electrochemical hydrogen pump 100 is constant. Hence, in this case, according to the reaction/diffusion overvoltage graph 400A of Fig. 4, with the change in cathode gas pressure at the cathode CA side of the electrochemical hydrogen pump 100, the pump overvoltage is also maintained approximately constant at a voltage EA. On the other hand, according to the total overvoltage graph 400B, as the cathode gas pressure at the cathode CA side is increased, the pump overvoltage is exponentially increased from this voltage EA.

Fig. 5 shows, in the case in which the current control shown by the current graph 300 of Example is performed, a thin dotted line (hereinafter, referred to as "reaction/diffusion overvoltage graph 500A") indicating the sum of the reaction overvoltage and the diffusion overvoltage of the electrochemical hydrogen pump 100 and a thick dotted line (hereinafter, referred to as "total overvoltage graph 500B") indicating the total of the sum of the reaction overvoltage and the diffusion overvoltage of the electrochemical hydrogen pump 100 and the overvoltage involving Nernst loss thereof.

As shown in Fig. 3, according to the current graph 300 of Example, as the cathode gas pressure at the cathode CA side of the electrochemical hydrogen pump 100 is increased, the current flowing between the anode AN and the cathode CA of the electrochemical hydrogen pump 100 is approximately linearly decreased from the current IB. Hence, in this case, according to the reaction/diffusion overvoltage graph 500A of Fig. 5, with the change in cathode gas pressure at the cathode CA side of the electrochemical hydrogen pump 100, the pump overvoltage is also approximately linearly decreased from a voltage EB. On the other hand, according to the total overvoltage graph 500B, the pump overvoltage is maintained approximately constant at the voltage EB.

That is, in this example, in order to maintain the total (total overvoltage) of the sum of the reaction overvoltage and the diffusion overvoltage of the electrochemical hydrogen pump 100 and the overvoltage involving Nernst loss thereof approximately constant with the change in cathode gas pressure at the cathode CA side of the electrochemical hydrogen pump 100, the current flowing between the anode AN and the cathode CA of the electrochemical hydrogen pump 100 is controlled.

Fig. 6 is a graph showing one example of a power consumption of the electrochemical hydrogen pump of the hydrogen supply system of the first example of the embodiment.

The horizontal axis of Fig. 6 indicates the cathode gas pressure at the cathode CA side of the electrochemical hydrogen pump 100. The vertical axis of Fig. 6 indicates the power consumption of the electrochemical hydrogen pump 100.

Fig. 6 shows a thick chain line (hereinafter, referred to as "power consumption graph 600 of Example") indicating the power consumption of the electrochemical hydrogen pump 100 which is obtained when the current control shown by the current graph 300 of Example is performed. In addition, a thin chain line (hereinafter, referred to as "power consumption graph 601 of Comparative Example") indicating the power consumption of the electrochemical hydrogen pump 100 which is obtained when the current control shown by the current graph 301 of Comparative Example is performed is also shown.

According to the power consumption graph 601 of Comparative Example shown in Fig. 6, as the cathode gas pressure at the cathode CA side of the electrochemical hydrogen pump 100 is increased, the power consumption of the electrochemical hydrogen pump 100 is gradually increased from a power WA.

On the other hand, the power consumption of the power consumption graph 600 of Example is decreased as the cathode gas pressure at the cathode CA side of the electrochemical hydrogen pump 100 is increased. That is, although a power WB at which the boosting of a hydrogen gas at the cathode CA side is started by the electrochemical hydrogen pump 100 is larger than the above power WA, in a region at a higher pressure than a predetermined gas pressure PA, the power consumption of the power consumption graph 600 of Example is lower than the power consumption of the power consumption graph 601 of Comparative Example.

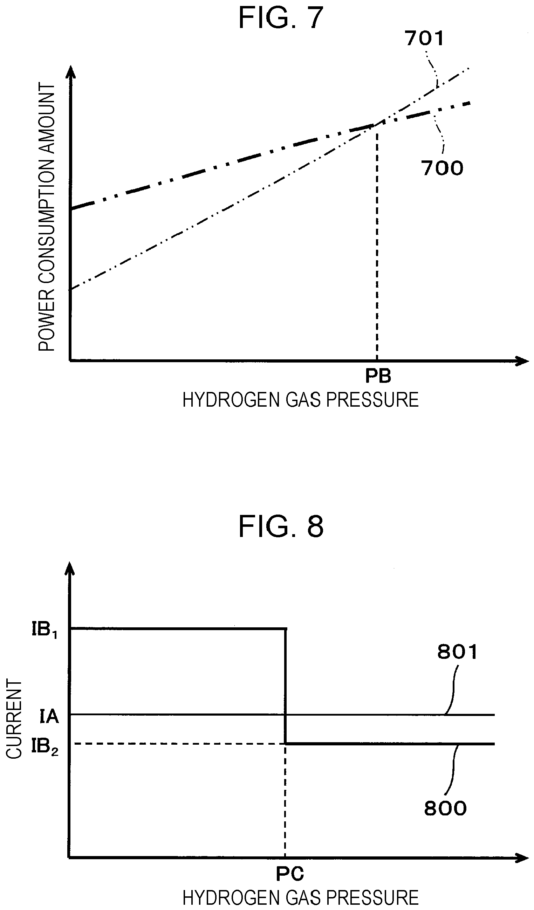

Fig. 7 is a graph showing one example of a power consumption amount of the electrochemical hydrogen pump of the hydrogen supply system of the first example of the embodiment.

The horizontal axis of Fig. 7 indicates the cathode gas pressure at the cathode CA side of the electrochemical hydrogen pump 100. The vertical axis of Fig. 7 indicates the power consumption amount of the electrochemical hydrogen pump 100.

Fig. 7 shows a thick two-dot chain line (hereinafter, referred to as "power consumption amount graph 700 of Example") indicating a power consumption amount of the electrochemical hydrogen pump 100 which is obtained when the current control shown by the current graph 300 of Example is performed. In addition, a thin two-dot chain line (hereinafter, referred to as "power consumption amount graph 701 of Comparative Example") indicating a power consumption amount of the electrochemical hydrogen pump 100 which is obtained when the current control shown by the current graph 301 of Comparative Example is performed is also shown.

As shown in Fig. 7, at the initial stage at which the cathode gas pressure at the cathode CA side of the electrochemical hydrogen pump 100 is not so high, the power consumption amount of the power consumption amount graph 700 of Example is larger than the power consumption amount of the power consumption amount graph 701 of Comparative Example. However, when the gas pressure at the cathode CA side of the electrochemical hydrogen pump 100 exceeds a predetermined gas pressure PB, the magnitude relationship therebetween is reversed, and the power consumption amount of the power consumption amount graph 700 of Example is decreased smaller than the power consumption amount of the power consumption amount graph 701 of Comparative Example.

As described above, according to the hydrogen supply system 200 of this example, at the initial stage of the hydrogen boosting operation of the electrochemical hydrogen pump 100, as is the current graph 300 of Example, by positively increasing the current flowing between the anode AN and the cathode CA of the electrochemical hydrogen pump 100, the current control to promote the hydrogen boosting at the cathode CA side is performed. In addition, when the cathode gas pressure at the cathode CA side is increased, the current control to decrease this current is performed. Compared to the control in which the current flowing between the anode AN and the cathode CA of the electrochemical hydrogen pump 100 is maintained constant as is the case shown by the current graph 301 of Comparative Example, the current control as described above is effective to reduce the increase in power consumption amount of the electrochemical hydrogen pump 100 which is caused when the pressure of hydrogen is boosted thereby to a predetermined value or more. In particular, when the gas pressure at the cathode CA side of the electrochemical hydrogen pump 100 exceeds the predetermined pressure PB, the power consumption amount of the power consumption amount graph 700 of Example can be decreased smaller than the power consumption amount of the power consumption amount graph 701 of Comparative Example.

The hydrogen supply system 200 of this example may be similar to the hydrogen supply system 200 of the embodiment except for the features described above.

(Second Example)

A hydrogen supply system 200 of a second example is similar to the hydrogen supply system 200 of the embodiment except for the following current control.

Fig. 8 is a graph showing one example of a current control of a current flowing between an anode and a cathode of an electrochemical hydrogen pump of the hydrogen supply system of the second example of the embodiment. The horizontal axis of Fig. 8 indicates a cathode gas pressure at a cathode CA side of an electrochemical hydrogen pump 100. The vertical axis of Fig. 8 indicates a current flowing between an anode AN and a cathode CA of the electrochemical hydrogen pump 100.

Fig. 8 shows a thick solid line (hereinafter, referred to as "current graph 800 of Example") indicating the current flowing between the anode AN and the cathode CA of the electrochemical hydrogen pump 100 of the hydrogen supply system 200 of the second example. In addition, as a comparative example, a thin solid line (hereinafter, referred to as "current graph 801 of Comparative Example") indicating a current in the case in which the current flowing between the anode AN and the cathode CA of the electrochemical hydrogen pump 100 is constant is also shown.

As shown in Fig. 8, at an initial stage of a hydrogen boosting operation at which the cathode gas pressure at a cathode CA side of the electrochemical hydrogen pump 100 is not so high, the current of the current graph 800 of Example is set high as compared to the current of the current graph 801 of Comparative Example.

In particular, a current $IB_1$ of the current graph 800 of Example at which boosting of a hydrogen gas at the cathode CA side is started by the electrochemical hydrogen pump 100 is larger than a current IA of the current graph 801 of Comparative Example. In addition, according to the current graph 800 of Example, the current flowing between the anode AN and the cathode CA of the electrochemical hydrogen pump 100 is maintained approximately constant at the current $IB_1$ until the gas pressure at the cathode CA side of the electrochemical hydrogen pump 100 reaches a predetermined gas pressure PC, and at this gas pressure PC, the current is decreased to a current $IB_2$ which is lower than the current IA. In addition, the current of the current graph 800 of Example is maintained approximately constant at the current $IB_2$ at a higher pressure side than this gas pressure PC. That is, in the hydrogen supply system 200 of this example, the current flowing between the anode AN and the cathode CA of the electrochemical hydrogen pump 100 is decreased from the current $IB_1$ to the current $IB_2$ in a stepwise manner at the gas pressure PC.

As one example, the current $IB_1$ of the current graph 800 of Example at which the boosting of a hydrogen gas at the cathode CA side is started by the electrochemical hydrogen pump 100 may be approximately 2.2 A/cm$^2$ on a current density basis, the current $IB_2$ of the current graph 800 of Example at which the pressure of the hydrogen gas is higher than the gas pressure PC may be approximately 0.7 A/cm$^2$ on a current density basis, and the current IA of the current graph 801 of Comparative Example may be approximately 1.5 A/cm$^2$ on a current density basis.

In addition, the gas pressure PC may be approximately half of a target pressure PT (such as approximately 20 MPa) of the electrochemical hydrogen pump 100.

In addition, the current density and the pressure are described by way of example and are not limited to those of this example.

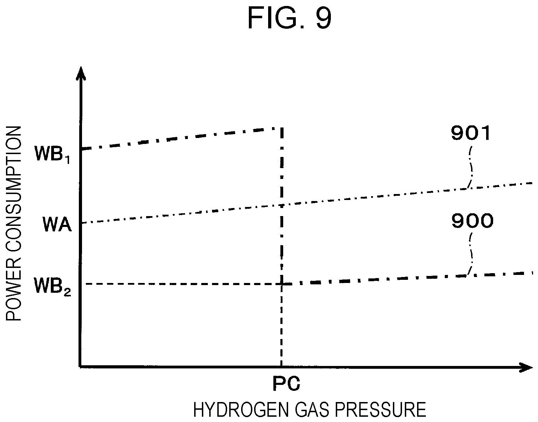

Fig. 9 is a graph showing one example of a power consumption of the electrochemical hydrogen pump of the hydrogen supply system of the second example of the embodiment.

The horizontal axis of Fig. 9 indicates a cathode gas pressure at the cathode CA side of the electrochemical hydrogen pump 100. The vertical axis of Fig. 9 indicates a power consumption of the electrochemical hydrogen pump 100.

Fig. 9 shows a thick chain line (hereinafter, referred to as "power consumption graph 900 of Example) indicating a power consumption of the electrochemical hydrogen pump 100 which is obtained when the current control shown by the current graph 800 of Example is performed. In addition, a thin dotted line (hereinafter, referred to as "power consumption graph 901 of Comparative Example) indicating a power consumption of the electrochemical hydrogen pump 100 which is obtained when the current control shown by the current graph 801 of Comparative Example is performed is also shown.

According to the power consumption graph 901 of Comparative Example of Fig. 9, as the cathode gas pressure at the cathode CA side of the electrochemical hydrogen pump 100 is increased, the power consumption of the electrochemical hydrogen pump 100 is gradually increased from a power WA.

On the other hand, according to the power consumption graph 900 of Example of Fig. 9, a power $WB_1$ at which the boosting of a hydrogen gas at the cathode CA side is started by the electrochemical hydrogen pump 100 is larger than the power WA of the power consumption graph 901 of Comparative Example until the gas pressure at the cathode CA side of the electrochemical hydrogen pump 100 reaches a predetermined gas pressure PC, and the magnitude relationship therebetween is maintained approximately as described above.

However, at the gas pressure PC, the power consumption of the power consumption graph 900 of Example is decreased to a power $WB_2$ which is smaller than the power consumption of the power consumption graph 901 Comparative Example, and at a higher pressure side than this gas pressure PC, the magnitude relationship therebetween is maintained approximately as described above.

In a lower column of the following Table 1, a ratio (hereinafter, referred to as "ratio of power consumption of Example) of the power consumption of the electrochemical hydrogen pump 100 which is obtained when the current control shown by the current graph 800 of Example is performed (that is, when the current is changed) is shown in each pressure range of 1 MPa from 0 to 20 MPa.

In addition, in an upper column of Table 1, a ratio (hereinafter, referred to as "ratio of power consumption of Comparative Example) of the power consumption of the electrochemical hydrogen pump 100 which is obtained when the current control shown by the current graph 801 of Comparative Example is performed (that is, when the current is maintained constant) is shown in each pressure range of 1 MPa from 0 to 20 MPa.

In addition, each power data of Table 1 is a normalized value based on the case in which when the cathode gas pressure at the cathode CA side is boosted from 0 to 1 MPa by the current control shown by the current graph 801 of Comparative Example, the power consumption is regarded as "1".

As the conditions of the calculation of Table 1, as described above, the pressure of a hydrogen gas boosted by the electrochemical hydrogen pump 100 is set to 0 to 20 MPa (hereinafter abbreviated as "boosting range of 0 to 20 MPa").

In addition, pressurized polarization of the electrochemical hydrogen pump 100 is assumed to be constant.

In addition, in the lower column of Table 1, the current density in the first half of the boosting range of 0 to 20 MPa was set to 2A/cm$^2$, and the current density of the latter half thereof was set to 1 A/cm$^2$. In the upper column of Table 1, the current density in the boosting range of 0 to 20 MPa was fixed to 1.5 A/cm$^2$. In this case, a boosting time of the former was assumed to be increased by 10% as compared to the boosting time of the latter.

Table 1

| PRESSURE RANGE [MPa] | 0→1 | 1→2 | 2→3 | 3→4 | 4→5 | 5→6 | 6→7 |
|---|---|---|---|---|---|---|---|
| RATIO OF POWER CONSUMPTION OF COMPARATIVE EXAMPLE | 1.00 | 1.11 | 1.18 | 1.22 | 1.26 | 1.29 | 1.31 |
| RATIO OF POWER CONSUMPTION OF EXAMPLE | 1.59 | 1.74 | 1.83 | 1.89 | 1.94 | 1.98 | 2.01 |
| PRESSURE RANGE [MPa] | 7→8 | 8→9 | 9→10 | 10→11 | 11→12 | 12→13 | 13→14 |
| RATIO OF POWER CONSUMPTION OF COMPARATIVE EXAMPLE | 1.34 | 1.35 | 1.37 | 1.39 | 1.40 | 1.41 | 1.43 |
| RATIO OF POWER CONSUMPTION OF EXAMPLE | 2.04 | 0.77 | 0.79 | 0.80 | 0.80 | 0.81 | 0.82 |
| PRESSURE RANGE [MPa] | 14→15 | 15→16 | 16→17 | 17→18 | 18→19 | 19→20 | INTEGRATED VALUE |
| RATIO OF POWER CONSUMPTION OF COMPARATIVE EXAMPLE | 1.44 | 1.45 | 1.46 | 1.47 | 1.48 | 1.48 | 26.84 |

(continued)

| PRESSURE RANGE [MPa] | 14→15 | 15→16 | 16→17 | 17→18 | 18→19 | 19→20 | INTEGRATED VALUE |
|---|---|---|---|---|---|---|---|
| RATIO OF POWER CONSUMPTION OF EXAMPLE | 0.83 | 0.84 | 0.84 | 0.85 | 0.85 | 0.86 | 25.72 |

As shown in Table 1, when the cathode gas pressure at the cathode CA side of the electrochemical hydrogen pump 100 is boosted from 0 MPa to approximately 20 MPa, the integrated value of the ratio of the power consumption of Example is smaller than the integrated value of the ratio of the power consumption of Comparative Example.

In addition, the pressure data and the power data of Table 1 are shown by way of example and are not limited to those of this example.

As described above, according to the hydrogen supply system 200 of this example, at the initial stage of the hydrogen boosting operation of the electrochemical hydrogen pump 100, as shown by the current graph 800 of Example, the current flowing between the anode AN and the cathode CA of the electrochemical hydrogen pump 100 is positively increased, so that the current control to promote the hydrogen boosting at the cathode CA is performed. In addition, when the cathode gas pressure at the cathode CA side is increased, the current control to decrease this current is performed. Compared to the case in which as is the current graph 801 of Comparative Example, the current flowing between the anode AN and the cathode CA of the electrochemical hydrogen pump 100 is controlled constant, the current control as described above is effective to reduce the increase in power consumption amount of the electrochemical hydrogen pump 100 which is caused when the pressure of hydrogen is boosted thereby to a predetermined value or more. In particular, when the cathode gas pressure at the cathode CA side of the electrochemical hydrogen pump 100 is boosted, for example, from 0 MPa to approximately 20 MPa, the integrated value of the ratio of the power consumption of Example can be decreased as compared to the integrated value of the ratio of the power consumption of Comparative Example. For example, in the case shown in Table 1, the former integrated value can be decreased smaller than the latter integrated value by approximately 4%.

The hydrogen supply system 200 of this example may be similar to the hydrogen supply system 200 of the embodiment except for the features described above.

In addition, the embodiment, the first example of the embodiment, and the second example thereof may be used in combination if not conflicting with each other.

In addition, from the above explanation, various improvements and other embodiments of the present disclosure are apparent to a person skilled in the art. Hence, it is to be understood that the above explanation is described by way of example and is provided to suggest the best mode of implementing the present disclosure to a person skilled in the art. The details of the structures and/or the functions described above can be substantially changed without departing from the spirit and the scope of the present disclosure.

According to one aspect of the present disclosure, there can be provided a hydrogen supply system capable of reducing an increase in power consumption amount of an electrochemical hydrogen pump which is caused when the pressure of hydrogen is boosted thereby to a predetermined pressure or more.

**Claims**

1. A hydrogen supply system comprising:

   an electrochemical hydrogen pump which includes:

      an electrolyte membrane;
      a pair of anode and cathode provided on both surfaces of the electrolyte membrane; and
      a current adjuster which adjusts a current flowing between the anode and the cathode and which generates hydrogen boosted at a cathode side from an anode fluid supplied to an anode side when the current is allowed to flow between the anode and the cathode by the current adjuster; and

   a controller which controls the current adjuster to decrease the current flowing between the anode and the cathode when the pressure of a cathode gas containing the boosted hydrogen is increased.

2. The hydrogen supply system according to Claim 1,
   wherein the current adjuster includes a voltage applier which applies a voltage between the anode and the cathode, and

the controller decreases the voltage applied by the voltage applier to decrease the current flowing between the anode and the cathode when the pressure of the cathode gas is increased.

## FIG. 1

# FIG. 2

## FIG. 3

CURRENT

IB

IA

301

300

HYDROGEN GAS PRESSURE

## FIG. 4

PUMP OVERVOLTAGE

400B

400A

EA

HYDROGEN GAS PRESSURE

## FIG. 5

## FIG. 6

# FIG. 7

701
700

POWER CONSUMPTION AMOUNT

PB
HYDROGEN GAS PRESSURE

# FIG. 8

$IB_1$
801
IA
$IB_2$
800

CURRENT

PC
HYDROGEN GAS PRESSURE

# FIG. 9

Europäisches
Patentamt

European
Patent Office

Office européen
des brevets

# EUROPEAN SEARCH REPORT

Application Number

EP 19 16 2706

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/246373 A1 (LUDLOW DARYL L [US] ET AL) 25 October 2007 (2007-10-25) * paragraphs [0008], [0013], [0017] - [0018], [0022], [0032], [0058], [0061]; figure 1 * ----- | 1,2 | INV. C25B1/10 C25B15/02 B01D53/32 H01M8/04089 |
| X | US 2004/253494 A1 (MARUYAMA RYUICHIRO [JP] ET AL) 16 December 2004 (2004-12-16) * paragraphs [0079] - [0082], [0084]; claim 1 * ----- | 1,2 | |

TECHNICAL FIELDS
SEARCHED        (IPC)

C25B
B01D
H01M

The present search report has been drawn up for all claims

| Place of search | Date of completion of the search | Examiner |
|---|---|---|
| Munich | 14 August 2019 | Hammerstein, G |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................
& : member of the same patent family, corresponding
    document

# EP 3 550 056 A1

## ANNEX TO THE EUROPEAN SEARCH REPORT
## ON EUROPEAN PATENT APPLICATION NO.

EP 19 16 2706

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2019

| Patent document cited in search report | | | Publication date | Patent family member(s) | | | Publication date |
|---|---|---|---|---|---|---|---|
| US 2007246373 | A1 | | 25-10-2007 | US | 2007246373 | A1 | 25-10-2007 |
| | | | | WO | 2007124389 | A2 | 01-11-2007 |
| US 2004253494 | A1 | | 16-12-2004 | CN | 1555425 | A | 15-12-2004 |
| | | | | EP | 1426468 | A1 | 09-06-2004 |
| | | | | JP | 3719178 | B2 | 24-11-2005 |
| | | | | JP | 2003082486 | A | 19-03-2003 |
| | | | | KR | 20040039334 | A | 10-05-2004 |
| | | | | US | 2004253494 | A1 | 16-12-2004 |
| | | | | WO | 03025251 | A1 | 27-03-2003 |

EPO FORM P0459

For more details about this annex : see Official Journal of the European Patent Office, No. 12/82

**EP 3 550 056 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015117139 A